# EUROPÄISCHE PATENTSCHRIFT

(11) **EP 0 591 766 B1**
(45) Veröffentlichungstag und Bekanntmachung des Hinweises auf die Patenterteilung: **29.01.1997**
(21) Anmeldenummer: 93115263.1
(22) Anmeldetag: 22.09.1993
(51) Int. Cl.: C08J 9/10, C08G 18/10

(54) **Heisshärtbare, expandierbare Einkomponenten-Polyurethan-Treibmittel-Komposition**
Heat-curable, expansible one-component polyurethane - blowing agent composition
Composition mono-composant thermodurcissable et expansible d'un agent d'expansion de polyuréthane

(30) Priorität: 05.10.1992 DE 4233346
(43) Veröffentlichungstag der Anmeldung: 13.04.1994
(73) Patentinhaber: BAYER AG, 51368 Leverkusen (DE)
(72) Erfinder: Werner, Joachim, Dr., D-41539 Dormagen (DE); Liman, Ulrich, Dr., D-40789 Monheim (DE); Meckel, Walter, Dr., D-41468 Neuss (DE)

(56) Entgegenhaltungen:
- US-A- 3 488 302
- US-A- 4 722 969
- DATABASE WPI Week 9131, 25. Juni 1991 Derwent Publications Ltd., London, GB; AN 228257 'Composition of fire-proof foamed material' & JP-A-3 149 283 (MITSUI KINZOKU TORYO KAG) 25. Juni 1991
- DATABASE WPI Week 9049, 25. Oktober 1990 Derwent Publications Ltd., London, GB; AN 364820 'Grip member motor car door handles . . .' & JP-A-2 262 464 (SANYO CHEM. IND. LTD.) 25. Oktober 1990
- DATABASE WPI Week 9131, 25. Juni 1991 Derwent Publications Ltd., London, GB; AN 228257 'Composition of fire-proof foamed material' & JP-A-3 149 283
- DATABASE WPI Week 9049, 25. Oktober 1990 Derwent Publications Ltd., London, GB; AN 364820 'Grip member motor car door handles . . .' & JP-A-2 262 464

## Beschreibung

Die Erfindung betrifft heißhärtbare, expandierbare Einkomponenten-Polyurethan-Treibmittel-Kompositionen, welche im wesentlichen aus einer Dispersion aus pulverförmigen festen Treibmittel sowie einer festen Polyhydroxylverbindung in einem flüssigen oder zumindest pastösen NCO-Polyurethan-Präpolymer bestehen und sich durch hohe Lagerstabilität sowie - im ausgehärteten Zustand - hohe Thermostabilität auszeichnen. Die Erfindung betrifft ferner die Verwendung dieser Kompositionen zur Erzeugung geschäumter oder zumindest zelliger Formkörper.

Bekannt und Stand der Technik ist das Ausschäumen von Hohlräumen, z.B. im Automobil- oder Schiffsbau, mit Polyurethan(PU)-Hartschaum (vgl. Becker/Braun, Kunststoff-Handbuch, Bd. 7, "Polyurethane", 2. Auflage, Carl Hanser Verlag, München, Wien, 1983, Seite 320 ff.) Dabei wird die flüssige 2-Komponenten-Schaumrezeptur über Dosiervorrichtungen in den Hohlraum eingespritzt, wo sie unter Expansion ausreagiert. Dabei besteht die Gefahr des Austretens oder Ablaufens der Reaktionsmischung an undichten Stellen, welche durch "Vorschäumen" nur in Grenzen gehalten werden kann. Da im Karosseriebau das Ausschäumen vorteilhaft nach der Lackierung erfolgt, um eine Schrumpfung oder Ablösung des Schaumes bei der Einbrennlackierung zu vermeiden, ist ein Austrieb oder Auslaufen der Schaummischung besonders störend.

Bekannt ist ferner die Verwendung hochschmelzender Hydroxylverbindungen in Isocyanatgruppen enthaltenden Systemen zur Herstellung hitzehärtbarer Kompositionen. So wird in US 2 908 657 die Verwendung von Stärke zur Herstellung vernetzter PU-Elastomere beschrieben. In US 3 488 302, US 4390 678, US 4 412 033 sowie DE-OS 3 734 340 wird die Verwendung solcher Systeme als Kleb- und Dichtstoffe oder für Beschichtungen unter Verwendung von Pentaerythrit als Hydroxylkomponente beschrieben.

Die Verwendung einer pulverförmigen Mischung aus bis 70°C festen, gepulverten NCO-PU-Präpolymeren in Kombination mit einem pulverförmigen, bei erhöhter Temperatur Wasser abspaltendem Material (z.B. Borsäure) als hitzehärtbare Komposition zur Erzeugung von PU-Schäumen ist in US 3 280 048 beschrieben. Die Herstellung dieser Pulvermischung setzt aber eine aufwendige Mahlung des Präpolymeren und Feststoffmischvorgänge voraus. EP 0 392 171 beschreibt ebenfalls verschäumbare, hitzehärtbare Polyurethane auf Basis von NCO-PU-Präpolymeren und bei Erhitzen Wasser abspaltenden Materialien (z.B. CaSO₄ x H₂O). Um eine hinreichende Lagerstabilität zu erreichen, müssen die Partikel des zugesetzten, Wasser abspaltenden Härters aber vor der Dispergierung zusätzlich z.B. durch Reaktion mit Monoisocyanaten oder durch Umhüllung mit inerten Materialien (z.B. Thermoplasten wie Polyethylen, Polyamiden oder Polyurethanen) inertisiert werden, was zusätzliche aufwendige Arbeitsschritte erfordert.

Nach den obenstehenden Ausführungen wäre es vorteilhaft, wenn z.B. bei Hohlraumverschäumungen eine 1-komponentige Rezeptur ohne aufwendige Dosiervorrichtungen verwendet werden könnte, ohne daß die Gefahr von Auslaufen oder Austreiben der schäumenden Mischung besteht und wenn die Verschäumung noch vor der Lackierung erfolgen könnte. Im Sinne einer Kostenminimierung bei der Herstellung wäre es zweckmäßig, wenn nur wenige, einfache Schritte zur Herstellung nötig wären.

Es wurde nun gefunden, daß diese Aufgabe gelöst werden kann durch eine heißhärtbare, expandierbare Einkomponenten-Polyurethan-Treibmittel-Komposition, welche eine Mischung darstellt aus
a) einem bei Raumtemperatur flüssigen oder zumindest pastösen NCO-Präpolymer, welches erhalten wird durch Umsetzung eines organischen Polyisocyanates mit einer Polyhydroxyverbindung sowie
b) einer festen Polyhydroxyverbindung mit im Mittel mindestens zwei Hydroxygruppen pro Molekül, einem Schmelzpunkt über 100 °C und einer Korngröße kleiner als 1 mm sowie
C) einem festen Treibmittel mit einer mittleren Partikelgröße von 1 - 300 µ und einem Zersetzungstemperaturbereich zwischen 100 und 215 °C sowie
d) gegebenen Hilfs- und Zuschlagsstoffen wie Pigmenten, Katalysatoren, Stabilisatoren, Fließhilfsmitteln, Thixotropiermitteln, Trockenmitteln, Schaumreglern
mit der Maßgabe, daß die Zersetzungstemperatur des Treibmittels c) oberhalb der bei 100 - 200 °C liegenden Aushärtetemperatur der Komposition liegt.

Als organische Polyisocyanate zur Herstellung des erfindungsgemäß verwendeten NCO-Prepolymers a) sind aliphatische, aromatische und cycloaliphatische Polyisocyanate oder Gemische derselben geeignet, wobei sich der Term "aliphatische Isocyanate" auf solche Verbindungen bezieht, bei denen sich die NCO-Gruppen an gesättigten C-Atomen befinden. Beispiele für geeignete Polyisocyanate sind 1,6-Hexamethylendiisocyanat, Isophorondiisocyanat, 4,4'-Methylen-bis(cyclohexylisocyanat), 2,4'- sowie 4,4'-Diphenylmethandiisocyanat oder Gemische derselben, 2,4-oder 2,6-Toluylendiisocyanat oder Gemische derselben, 1,4-Phenylendiisocyanat und 1,5-Naphthylendiisocyanat.

Bevorzugt werden Polyisocyanate mit zwei NCO-Gruppen pro Molekül verwendet. Höherfunktionelle Polyisocyanate sind aber ebenfalls geeignet unter der Voraussetzung, daß das resultierende Prepolymer a) flüssig oder zumindest pastös bleibt. Ist dies gewährleistet, sind auch z.B. die in der Lack- und Coatingsindustrie bekannten höherfunktionellen Isocyanate wie Polymere oder Polymer/Monomer-Mischungen des Diphenylmethandiisocyanats, Biurete, Trimethylolpropanaddukte oder Trimere (Isocyanurate) der oben genannten Diisocyanate zumindest anteilig einsetzbar.

Als Polyhydroxyverbindung bei der Herstellung des NCO-Prepolymers, welches als erfindungsgemäße Komponente a) verwendet wird, werden bevorzugt Glykole mit im Mittel zwei Hydroxygruppen und bevorzugt mittleren Molmassen bis etwa 6 000 eingesetzt. Dabei kann es sich beispielsweise um hydroxyfunktionelle Polyester, Polycarbonate, Polyestercarbonate, Polyether, Polyethercarbonate, Polyacetale, Polyacrylate, Polybutadiene, Polyesteramide oder Polythioether handeln. Auch aminofunktionelle Polyether (vergl. US 4 724 252, DOS 37 13 858) können eingesetzt werden. Dabei sind solche Verbindungen bevorzugt, welche pro Molekül im Mittel zwei gegenüber NCO-Gruppen reaktive Gruppen aufweisen. Höherfunktionelle Verbindungen können eingesetzt werden, doch muß dann gegebenenfalls durch Beimischung monofunktioneller Reaktanden gewährleistet sein, das das erfindungsgemäß verwendete NCO-Prepolymer a) flüssig oder zumindest pastös bleibt.

Geeignete Polyether sind z.B. solche, welche durch Ringöffnungspolymerisation von Propylenoxid oder Ethylenoxid in Gegenwart von einer oder mehrerer Verbindungen mit aktivem Wasserstoff oder durch Ringöffnungspolymerisation von Tetrahydrofuran erhalten werden.

Wenn gegenüber Licht beständige Produkte erforderlich sind, werden bevorzugt Polyester, Polycarbonate oder Polyestercarbonate eingesetzt. Geeignete Polyesterpolyole können z.B. durch Kondensation einer oder mehrerer Dicarbonsäuren, ihrer Anhydride oder Diester durch Umsetzung mit einem oder mehreren niedermolekularen Glykolen erhalten werden. Geeignete Dicarbonsäuren sind z.B. Bernsteinsäure, Adipinsäure, Korksäure, aromatische Dicarbonsäuren wie z.B. Phthalsäure, Isophthalsäure oder Terephthalsäure oder die entsprechenden teil- oder perhydrierten Typen. Geeignete niedermolekulare Glykole sind z.B. Ethylenglykol, 1,2- oder 1,3-Propylenglykol, 1,4- oder 2,3-Butandiol, Neopentylglykol, 1,6-Hexandiol, 1,8-Octandiol, Cyclohexandimethanol, Diethylenglykol oder Dipropylenglykol. Polyester, die durch Polymerisation von Lactonen wie z.B. ε-Caprolacton erhalten werden, sind ebenfalls geeignet. Geeignete aliphatische hydroxyfunktionelle Polycarbonate können z.B. durch Reaktion der oben genannten niedermolekularen Glykole mit Diarylcarbonaten oder cyclischen Carbonaten wie Propylencarbonat erhalten werden. Die exemplarisch genannten niedermolekularen Glykole selbst können ebenfalls zur Darstellung der Komponente a) verwendet werden.

Bei der Auswahl der geeigneten Polyhydroxylverbindungen zur Herstellung des NCO-Präpolymers a) sind solche bevorzugt, die dem Präpolymer die erfindungsgemäß geeignete flüssige oder pastöse Konsistenz verleihen. Flüssige Polyetherpolyole sowie Polyesterpolyole, die entweder flüssig sind oder Schmelzpunkte von unterhalb 80°C und Glasübergangstemperaturen von unterhalb 0°C aufweisen, sind besonders geeignet. Ganz besonders geeignet sind Polyether oder -ester mit einem durchschnittlichen Molekulargewichten von über 500 oder deren Gemische.

Die erfindungsgemäß verwendeten Präpolymere a) werden in der dem PU-Chemiker an sich bekannten Weise durch Reaktion eines stöchiometrischen Überschusses eines oder mehrerer Polyisocyanate mit einer oder mehreren Polyhydroxyverbindungen hergestellt. Bevorzugt wird die Umsetzung unter Rühren und Beaufschlagung mit Inertgas, wie z.B. Stickstoff, bei etwa 80-100°C durchgeführt. Das Verhältnis von NCO- zu OH-Gruppen der Reaktanden liegt im allgemeinen über 1,05:1, bevorzugt zwischen 1,05:1 bis 10:1, besonders bevorzugt zwischen 1,5:1 bis 3:1. Bei der Umsetzung können Katalysatoren eingesetzt werden, doch führen diese im allgemeinen zu einer Reduzierung der Lagerstabilität der erfindungsgemäßen Treibmittel-Polyurethan-Komposition.

Die festen Polyhydroxyverbindungen b) sind Verbindungen mit mindestens zwei OH-Gruppen pro Molekül und einem Schmelzpunkt über 100 °C. Bevorzugt weisen diese Polyhydroxyverbindungen mehr als zwei OH-Gruppen pro Molekül. Bevorzugt liegt der Schmelzpunkt, über 150 °C. Die Korngröße der festen Polyhydroxyverbindung b) sollte kleiner als 1 mm, bevorzugt kleiner als 100 µm betragen.

Geeignet als feste Polyhydroxyverbindung
b) sind z.B. Stärke oder Rohrzucker (Saccharose) oder Zuckeralkohole wie Mannit und Sorbit. Geeignet sind aber auch feinteilige Pulver aus Hydroxygruppen tragenden synthetischen Makromolekülen wie z.B. hydrolysierte Ethylen-Vinylacetat-Copolymere. Weiterhin geeignet ist z.B. Tris-(2-hydroxyethyl)-isocyanurat. Bevorzugt im Sinne der vorliegenden Erfindung ist Pentaerythrit (2,2-Bis-(hydroxymethyl)-1,3-propandiol), ein kristalliner, farb- und geruchsloser tetrafunktioneller Alkohol, der z.B. durch Kondensation von Formaldehyd und Acetaldehyd hergestellt werden kann und in fein gemahlener Form mit Korngröße von unter 50 µm kommerziell erhältlich ist (z.B. Degussa AG, Frankfurt/M.). Der Schmelzpunkt liegt bei 260°C-263°C.

Bevorzugt sind auch z.B. Dimere oder Trimere des Pentaerythrits sowie von Pentaerythrit oder seinen Oligomeren abgeleitete Ester oder Mischungen derselben.

Als feste Treibmittel c) werden bei Raumtemperatur (25 °C) feste, pulverförmige Treibmittel mit einer mittleren Partikelgröße von 1 bis 300 µ, vorzugsweise bis 30 µ, verwendet.

Zweckmäßigerweise werden chemische Verbindungen verwendet, die sich innerhalb eines bestimmten, möglichst engen Temperaturintervalls mit hoher Gasausbeute zersetzen. Die Zersetzungstemperatur muß dabei der Verarbeitungs- und Aushärtungstemperatur der verwendeten erfindungsgemäßen Treibmittel-Polyurethan-Kompositionen angepaßt sein. Erfindungsgemäß werden Treibmittel eingesetzt, welche sich bei Temperaturen zwischen 100°C und 215 °C zersetzen. Das Treibmittel sollte mit den eingesetzten Komponenten a), b) und d) nicht in störender Weise reagieren. Ferner sollten die bei der thermischen Zersetzung entstehenden Zersetzungsprodukte gesundheitlich unbedenklich sein und die Thermostabilität und mechanischen Eigenschaften der geschäumten oder zelligen Polyurethan-Formkörper nicht negativ beeinflussen, ausblühen oder verfärbend wirken.

Feste Treibmittel, die diese Anforderungen zumindest teilweise erflüllen, sind beispielsweise Azoverbindungen wie Azoisobuttersäurenitril, Azodicarbonamid (auch Azobisformamid genannt) oder Barium-azodicarboxylat, substituierte Hydrazine wie z.B. Diphenylsulfon-3,3'-dissulfohydrazid, 4,4'-Oxybis(sulfohydrazid), Trihydrazinotriazin oder Arylbis(sulfohydrazid), Semicarbazide wie z.B. p-Toluylen-sulfonylsemicarbazid oder 4,4'-Oxy-bis(benzolsulfonyl-semicarbazid), Triazole wie z.B. 5-Morpholyl-1,2,3,4-Thiatriazol und N-Nitrosoverbindungen wie z.B. N,N'-Dinitrosopentamethylentetramin oder N,N-Dimethyl-N,N'-dinitrosoterephthalamid, Benzoxacine wie z.B. Isatosäureanhydrid oder Treibmittelzusammensetzungen wie z.B. Natriumbicarbonat/Zitronensäure-Gemische. Von den genannten Verbindungen haben sich besonders die Azoverbindungen und Hydrazine bewährt. Die erfindungsgemäßen festen Treibmittel können als Einzelverbindungen oder als Mischungen eingesetzt werden.

Besonders bevorzugt im Sinne der vorliegenden Erfindung ist das Azodicarbonamid, welches mit verschiedenen definierten mittleren Teilchengrößen kommerziell erhältlich ist. Bevorzugt werden Typen mit einer mittleren Teilchengröße unter 100 µm, besonders bevorzugt unter 50 µm verwendet. Die Zersetzungstemperatur des Azodicarbonamids liegt bei 205 bis 215°C. Die Partikelgröße beeinflußt die Zersetzungstempreatur und -geschwindigkeit. Durch spezielle Zersetzungskatalysatoren ("Kicker") kann die Zersetzungstemperatur und -geschwindigkeit eingestellt werden. Besonders bevorzugt sind kommerziell erhältliche Azodicarbonamidzubereitungen, welche sich zwischen 150°C und 200°C zersetzen.

Zur Einstellung der Aushärtetemperatur der erfindungsgemäßen Treibmittel-Polyurethan-Komposition sowie zur Beschleunigung der Aushärtung bei gegebener Temperatur und Anpassung an die Zersetzungstemperatur des Treibmittels können im Sinne der vorliegenden Erfindung spezielle Katalysatoren eingesetzt werden, die die Lagerstabilität nicht signifikant verringern. Geeignet sind dabei z.B. die in DE-OS 3 734 340 genannten Metallsalze von Fettsäuren mit mehr als 11 Kohlenstoffatomen und Schmelzpunkten oberhalb 100°C. Bevorzugt im Sinne der vorliegenden Erfindung ist das Zinkstearat (Schmelzpunkt 116°C), dessen katalytische Wirksamkeit z.B. in US 4 119 594 beschrieben wird, und welches vorzugsweise in fein verteilter Form mit Korngrößen unter 100 µm ub Mengen bis zu 1 %, besonders bevorzugt 0,1 bis 0,5 %, eingesetzt wird.

Als Bestandteile der erfindungsgemäßen Treibmittel-Polyurethan-Komposition können weitere Hilfs- und Zusatzstoffe wie z.B. anorganische und organische Pigmente, Farbstoffe, Antioxidantien, UV-Stabilisatoren, Fließhilfsmittel, Weichmacher usw. verwendet werden.

Zur Beeinflussung der Beschaffenheit des Schaumes, wie der Zellstruktur oder - größe, können die dem PU-Chemiker bekannten Schaumregler, z.B. Schaumstabilisatoren wie z.B. Polyethersiloxane, Verwendung finden.

Zur Einstellung rheologischer Eigenschaften können den erfindungsgemäßen Treibmittel-Polyurethan-Kompositionen "chemische Thixotropiermittel" wie etwa Diamine, z.B. 4,4'-Methylen-bis(cyclohexylamin) oder Diethyltoluylendiamin in Mengen bis etwa 10 Gew.-Teilen, bevorzugt bis 5 Gewichtsteilen, auf 100 Teile Gesamtmischung, zugegegeben werden, so daß die Ausbildung von Harnstoffgruppen die Viskosität der erfindungsgemäßen Komposition heraufsetzt, ohne zur Verfestigung zu führen. Es können auch inerte anorganische Füllstoffe wie z.B. Schwerspat, Aluminiumoxid, Talke oder Dampfphasenkieselsäuren, (z.B. Aerosile® der Fa. Degussa) zugesetzt werden. So kann z.B. das Fließverhalten der erfindungsgemäßen Kompositionen bei der Aushärtung eingestellt und damit z.B. ein Wegfließen der noch nicht vollständig ausgehärteten und verschäumten Mischung aus Hohlräumen vorteilhaft verhindert werden. Gleichzeitig wird das Sedimentieren der eindispergierten Komponentenb) und c) verhindert. Dazu werden bevorzugt hydrophobierte Dampfphasenkieselsäuren wie z.B. Aerosil® R202 der Fa. Degussa in Mengen von 0,02 bis 10 %, bevorzugt 0,02 bis 4 % bezogen auf das Endprodukt, in die Mischung eingerührt oder in geeigneten Aggregaten geknetet. Die zu verwendende Menge ist so zu bemessen, daß die resultierte erfindungsgemäße Komposition bei Raumtemperatur eine zähflüssige bis pastöse Konsistenz erhält, so daß die Komposition unter Scherbeanspruchung noch fließfähig ist, jedoch nicht notwendigerweise ohne Scherbeanspruchung.

Die Herstellung der erfindungsgemäßen expandierbaren Treibmittel-Polyurethan-Kompositionen erfolgt vorzugsweise in üblichen Rühraggregaten als "Eintopfreaktion". In den Fällen, in denen die Komposition eine pastöse Beschaffenheit aufweist, kann die Verwendung von Knetaggregaten vorteilhaft sein. Vorzugsweise wird die Umsetzung der Polyisocyanate und der Polyhydroxyverbindungen zum erfindungsgemäß verwendeten flüssigen oder pastösen NCO-Präpolymer a) bei 50 bis 80°C bis zu konstantem NCO-Wert durchgeführt. Anschließend werden die gegebenenfalls z.B. durch Erwärmen im Vakuum von anhaftender Feuchtigkeit befreiten Komponenten b) bis d) unter Rühren, gegebenenfalls Kneten, zugegeben und homogen verteilt. Dabei sollte die Temperatur 70°C nicht überschreiten. Der gegebenenfalls verwendete Aushärtungskatalysator wie z.B. Zinkstearat sowie die Viskosität stark heraufsetzende Zuschlagsstoffe wie z.B. die genannten Gasphasenkieselsäuren (Aerosile) werden vorzugsweise zuletzt eingearbeitet. Die resultierende erfindungsgemäße Komposition sollte bei Raumtemperatur (23°C) eine zähflüssige bis pastöse Konsistenz aufweisen. Dieses Erscheinungsbild ist nach Zugabe der Komponenten b) und c) z.B. durch eine geeignete Menge an anorganischen Füllstoffen (s.o.) einstellbar.

Die Abfüllung der erfindungsgemäßen Komposition kann z.B. in Fässer oder Kartuschen erfolgen, aus denen sie z.B. über Faßpumpen oder unter Druck bei Temperaturen nicht über 70°C dosiert werden kann. Alternativ und für Hohlraumverschäumungen vorteilhaft kann die erfindungsgemäße Komposition in flexible Kunststoffbehältnisse, z.B. Polyethylenschläuche oder -beutel, eingeschlossen, z.B. verschweißt werden. Diese "verbrauchsfertigen Gebinde" können z.B. in gegenüber Feuchtigkeit dichten Behältnissen gelagert und zum Verbraucher versandt werden.

Die Aushärtung unter Expansion der erfindungsgemäßen Kompositionen erfolgt bei Temperaturen zwischen 100 und 200°C, besonders bevorzugt 150 und 200°C, z.B. in einem Heißluftofen oder durch Mikrowellenbehandlung.

Für die Hohlraumverschäumung im Karosseriebau sind die erfindungsgemäßen Kompositionen vorteilhaft einzusetzen, indem sie z.B. in Form der "gebrauchsfertigen Gebinde", z.B. eingeschweißt in Polyethylenbeutel, bei Raumtemperatur in den Hohlraum eingebracht werden, wobei ein Auslaufen von Flüssigkeit aus nach unten geneigten Hohlräumen vorteilhaft vermieden wird und wegen des zähflüssigen oder pastösen Charakters eine Anpassung an die Geometrie des Hohlraums möglich ist. Die Aushärtung kann dann z.B. im Zuge eines Lackierprozesses bei Temperaturen zwischen 150 und 200°C über 10-15 Minuten erfolgen, wobei unter Volumenexpansion und Aufplatzen des umhüllenden Beutels ein vernetztes, geschäumtes oder zumindest zelliges Formteil entsteht, das den Hohlraum ausfüllt und an den Wandungen anhaftet.

Die erfindungsgemäße expandierbare Treibmittel-Polyurethan-Komposition kann somit vorteilhaft für Hohlraumverschäumungen, z.B. zur Wärme- oder Schallisolierung und Schall- oder Schwingungsdämpfung eingesetzt werden, wobei sie auch geeignet ist als schäumbarer Klebstoff, z.B. bei Sandwichelementen im Bausektor.

### Beispiele

In den nachfolgenden Beispielen werden folgende Ausgangs- und Zuschlagsstoffe eingesetzt:
- IPPD =: kommerziell erhältlicher Oxidationsstabilisator (Isopropyl-phenylphenylendiamin)
- Pentaerythrit =: feinst gemahlenes Pentaerythrit-Pulver (Degussa AG, Frankfurt/M.), durchschnittliche Partikelgröße unter 50 µm
- Azodicarbonamid =: sich bei ca. 150-160°C zersetzende, pulverförmige Azodicarbonamid-Zubereitung (Bayer AG), durchschnittliche Partikelgröße ca. 5 µm
- Aerosil R 202 =: hydrophobierte Dampfphasenkieselsäure (Degussa AG, Frankfurt/M.)

### Beispiel 1

500 Gew.-Teile eines Polypropylenglykols der OH-Zahl 112 und 175 Gew.-Teile 2,4-Toluylendiisocyanat werden unter Stickstoffatmosphäre und Rühren bei 80°C umgesetzt, beis der NCO-Wert konstant bleibt (ber. 6,2 % NCO). Die Temperatur wird auf 60°C gesenkt. Unter Rühren werden zugesetzt:
3,38 Gew.-Teile IPPD
34 Gew.-Teile Pentaerythrit
33,4 Gew.-Teile Azodicarbonamid sowie
3,35 Gew.-Teile Zn-Stearat.

Die zähflüssige Mischung wird in ca. 100 ml fassende mit Druckverschlüssen versehene Polyethylenbeutel gegossen, verschlossen und abkühlen gelassen.

Zur Herstellung eines vernetzten Schaumes wird der verschlossene Beutel mit der bei Raumtemperatur (25°C) hochviskos flüssigen Mischung in einem Heißluftofen bei 190°C 15 Min. lang gelagert. Man erhält ein unter Aufreißen der Polyethylenhülle expandiertes, elastisches, geschäumtes Formteil mit einer Rohdichte von ca. 0,4 g/cm³. Der gebildete Schaum erweicht oder schmilzt nicht unterhalb 250°C.

### Beispiel 2

1000 Gew.-Teile eines Polypropylenglykols der OH-Zahl 56 und 250 Gew.-Teile 4,4'-Diphenylmethan-diisocyanat werden unter Stickstoffatmosphäre und Rühren bei 80°C umgesetzt, bis der NCO-Wert konstant bleibt (ber. 3,4 % NCO). Die Temperatur wird auf 60°C gesenkt. Unter Rühren werden zugesetzt:
6,25 Gew.-Teile IPPD
34,0 Gew.-Teile Pentaerythrit
62,3 Gew.-Teile Azodicarbonamid
6,25 Gew.-Teile Zn-Stearat.

Anschließend werden 35 Gew.-Teile Aerosil R 202 eingerührt, wobei die Mischung stark eingedickt wird, aber bei 60°C noch gießfähig bleibt.

Die zähflüssige Mischung wird in ca. 100 ml fassende mit Druckverschlüssen versehene Polyethylenbeutel gegossen, verschlossen und abkühlen gelassen.

Zur Herstellung eines vernetzten Schaumes wird der verschlossene Beutel mit der bei Raumtemperatur (25°C) wachsartigen, knetbaren Mischung in einem Heißluftofen bei 190°C 15 Min. lang gelagert. Man erhält ein unter Aufreißen der Polyethylenhülle expandiertes, elastisches, geschäumtes Formteil mit einer Rohdichte von ca. 0,45 g/cm³. Der gebildete Schaum erweicht oder schmilzt nicht unterhalb 250°C.

Um das Ausschäumen eines Hohlaumes zu simulieren, wird in eine handelsübliche Aluminiumkartusche (Durchmesser 5 cm, Höhe 20 cm ein mit der Mischung gefüllter Polyethylenbeutel eingeführt und die Kartusche mit nach unten (ca. 30°C geneigter Öffnung im Heißluftofen bei 190°C für 15 Min. erhitzt. Die Mischung schäumt auf, wobei der gebildete Schaum unter Reißen und Schmelzen der Polyethylenhülle die Kartusche ausfüllt. Ein Auslaufen der schäumenden Mischung tritt nicht auf.

### Beispiel 3

500 Gew.-Teile eines Polypropylenglykols der OH-Zahl 112 und 258 Gew.-Teile eines Polyisocyanatgemisches der Diphenylmethanreihe mit einem NCO-Wert von 32,5 %, einem Anteil an Diphenylmethandiisocyanat-Isomeren von 90 % (zum Rest höherfunktionelle Polyisocyanate), die ihrerseits zu ca. 90 % aus 4,4'-Diphenylmethandiisocyanat bestehen werden unter Stickstoffatmosphäre und Rühren bei 80°C umgesetzt, bis der NCO-Wert konstant bleibt (ber. 5,5 % NCO). Die Temperatur wird auf 60°C gesenkt. Unter Rühren werden zugesetzt:
3,8 Gew.-Teile IPPD
34 Gew.-Teile Pentaerythrit
38 Gew.-Teile Azodicarbonamid
3,8 Gew.-Teile Zn-Stearat.

Anschließend werden 20 Gew.-Teile Aerosil R 202 eingerührt, wobei die Mischung stark eingedickt wird, aber bei 60°C noch gießfähig bleibt.

Die zähflüssige Mischung wird in ca. 100 ml fassende mit Druckverschlüssen versehene Polyethylenbeutel gegossen, verschlossen und abkühlen gelassen.

Zur Herstellung eines vernetzen Schaumes wird der verschlossene Beutel mit der bei Raumtemperatur (25°C) wachsartigen, knetbaren Mischung in einem Heißluftofen bei 190°C 15 Min. lang gelagert. Man erhält ein unter Aufreißen der Polyethylenhülle expandiertes, elastisches, geschäumtes Formteil mit einer Rohdichte von ca. 0,45 g/cm³. Der gebildete Schaum erweicht oder schmilzt nicht unterhalb 250°C.

### Beispiel 4

1000 Gew.-Teile eines Neopentylglykol-Hexandiol-polyadipats der OH-Zahl 56 und 222,3 Gew.-Teile Isophorondiisocyanat werden unter Stickstoffatmosphäre und Rühren bei 90°C umgesetzt, bis der NCO-Wert konstant bleibt (ber. 3,4 % NCO). Die Temperatur wird auf 60°C gesenkt. Unter Rühren werden zugesetzt:
34 Gew.-Teile Pentaerythrit
61.1 Gew.-Teile Azodicarbonamid
6,25 Gew.-Teile Zn-Stearat.

Abschließend werden 18 Gew.-Teile Aerosil R 202 eingerührt, wobei die Mischung stark eingedickt wird, aber bei 60°C noch gießfähig bleibt.

Die zähflüssige Mischung wird in ca. 100 ml fassende mit Druckverschlüssen versehene Polyethylenbeutel gegossen, verschlossen und abkühlen gelassen.

Zur Herstellung eines vernetzten Schaumes wird der verschlossene Beutel mit der bei Raumtemperatur (25°C) wachsartigen, knetbaren Mischung in einem Heißluftofen bei 190°C 15 Min. lang gelagert. Man erhält ein unter Aufreißen der Polyethylenhülle expandiertes, elastisches, geschäumtes Formteil mit einer Rohdichte von ca. 0,4 g/cm³. Der gebildete Schaum erweicht oder schmilzt nicht unterhalb 250°C.

## Patentansprüche

1. Heißhärtbare, expandierbare Einkomponenten-Polyurethan-Treibmittel-Komposition, welche eine Mischung darstellt aus
a) einem bei Raumtemperatur flüssigen oder zumindest pastösen NCO-Präpolymer, welches erhalten wird durch Umsetzung eines organischer Polyisocyanates mit einer Polyhydroxyverbindung sowie
b) einer festen Polyhydroxyverbindung mit im Mittel mindestens zwei Hydroxygruppen pro Molekül, einem Schmelzpunkt über 100 °C und einer Korngröße kleiner als 1 mm sowie
C) einem festen Treibmittel mit einer mittleren Partikelgröße von 1 - 300 µ und einem Zersetzungstemperaturbereich zwischen 100 und 215 °C sowie
d) gegebenen Hilfs- und Zuschlagsstoffen wie Pigmenten, Katalysatoren, Stabilisatoren, Fließhilfsmitteln, Thixotropiermitteln, Trockenmitteln, Schaumreglern
mit der Maßgabe, daß die Zersetzungstemperatur des Treibmittels c) oberhalb der bei 100 - 200 °C liegenden Aushärtetemperatur der Komposition liegt.

2. Komposition nach Anspruch 1, dadurch gekennzeichnet, daß es sich bei Komponente b) um pulverförmiges Pentaerythrit handelt.

3. Komposition nach einem der Ansprüche 1 und 2, dadurch gekennzeichnet, da das Präpolymer a) erhalten wird unter Verwendung von Diphenylmethan-4,4'-diisocyanat oder Toluylendiisocyanat oder einer Mischung derselben.

4. Komposition nach einem der Ansprüche 1 bis 3, dadurch gekennzeichnet, daß das Präpolymer a) erhalten wird unter Verwendung eines Polyetherpolyols oder eines Polyesterpolyols mit mittleren Molmassen von mehr als 500 oder Mischungen derselben.

5. Verwendung der erfindungsgemäßen Kompositionen gemäß einem der Ansprüche 1 bis 4 zur Erzeugung geschäumter oder zumindest zelliger Formkörper oder Füllungen durch Aushärten der Kompositionen bei 100-200°C unter Vernetzung der Komponente b) und Zersetzung des Treibmittels c).

## Claims

1. Heat-curable, expandable one-component polyurethane/blowing agent composition consisting of a mixture of
a) an NCO-prepolymer which is liquid or at least pasty at room temperature and is obtained by reacting an organic polyisocyanate with a polyhydroxyl compound and
b) a solid polyhydroxyl compound having an average of at least two hydroxyl groups per molecule, a melting point of above 100°C and a grain size of less than 1 mm and
c) a solid blowing agent having an average particle size of 1-300 µm and a decomposition temperature range of between 100 and 215°C and
d) optionally auxiliary substances and additives such as pigments, catalysts, stabilisers, flow auxiliaries, thixotroping agents, drying agents and foam regulators
with the proviso that the decomposition temperature of the blowing agent c) is above the curing temperature of the composition which is at 100-200°C.

2. Composition according to claim 1, characterised in that component b) is pulverulent pentaerythritol.

3. Composition according to one of claims 1 and 2, characterised in that the prepolymer a) is obtained using 4,4'-diphenylmethane diisocyanate or tolylene diisocyanate or a mixture thereof.

4. Composition according to one of claims 1 to 3, characterised in that the prepolymer a) is obtained using a polyether polyol or a polyester polyol having an average molecular weight of above 500 or mixtures thereof.

5. Use of the compositions according to the invention according to one of claims 1 to 4 for the production of foamed or at least cellular mouldings or fillings by curing the compositions at 100-200°C with crosslinking of component b) and decomposition of the blowing agent c).

## Revendications

1. Composition polyuréthane-agent porogène en un composant, expansible et thermodurcissable, qui consiste en un mélange de
a) un prépolymère à groupes NCO liquide ou au moins pâteux à température ambiante, qui a été obtenu par réaction d'un polyisocyanate organique avec un composé polyhydroxylé,
b) un composé polyhydroxylé solide, à deux groupes hydroxy en moyenne par molécule, avec un point de fusion supérieur à 100°C et une dimension de grain inférieure à 1 mm,
c) un agent porogène solide, à une dimension de particule moyenne de 1 à 300 µm, et une température de décomposition qui se situe dans l'intervalle de 100 à 215°C, et le cas échéant
d) des produits auxiliaires et additifs tels que des pigments, des catalyseurs, des stabilisants, des produits auxiliaires régulateurs des propriétés d'écoulement, des additifs conférant des propriétés thixotropes, des agents déshydratants, des régulateurs de la structure cellulaire,
la température de décomposition de l'agent porogène c) se situant au-dessus de la température de durcissement de la composition qui est elle-même de 100 à 200°C.

2. Composition selon la revendication 1, caractérisée en ce que le composant b) est un pentaérythritol en poudre.

3. Composition selon l'une des revendications 1 et 2, caractérisée en ce que le prépolymère a) a été obtenu avec utilisation du diphénylméthane-4,4'-diisocyanate ou du toluylènediisocyanate ou d'un mélange de ces diisocyanates.

4. Composition selon l'une des revendications 1 à 3, caractérisée en ce que le prépolymère a) a été obtenu avec utilisation d'un polyétherpolyol ou d'un polyesterpolyol de masse moléculaire moyenne supérieure à 500 ou leurs mélanges.

5. Utilisation des compositions selon l'invention selon l'une des revendications 1 à 4 pour la formation d'objets moulés en mousse ou au moins alvéolaires ou pour des bourrages par durcissement des compositions à des températures de 100 à 200°C avec réticulation du composant b) et décomposition de l'agent porogène c).
